# EUROPEAN PATENT APPLICATION

(11) **EP 3 675 146 A1**
(43) Date of publication of application: **01.07.2020**
(21) Application number: 19210810.8
(22) Date of filing: 22.11.2019
(51) Int. Cl.: H01H 3/16, H02H 5/12

(54) **A SAFETY SYSTEM FOR CUTTING OFF POWER IN CASE OF INTERFERENCE IN A MAINBOARD COVER**

(30) Priority: 26.12.2018 TR 201820563
(71) Applicant: Vestel Beyaz Esya Sanayi ve Ticaret A.S., 45030 Manisa (TR)
(72) Inventor: CALI, Yigithan, 45030 Manisa (TR); ALP, Orhan Efe, 45030 Manisa (TR); ARAZ, Firat, 45030 Manisa (TR)
(74) Representative: Cayli, Hülya

(57) **Abstract**

A safety system suitable for use in an electrical appliance which comprises a body; an electrical unit; a mainboard; a supply connector (1); a first line (6) between the phase output (4) and the supply connector (1); a second line (7) between the neutral output (5) and the supply connector (1); and a housing, the safety system **characterized by** comprising: a cover for protecting the mainboard from external factors; a first switch (2) which is electrically connected with the first line (6) at a point of the first line (6) located between the phase output (4) and the supply connector (1), and is located in the housing, wherein the first switch (2) is in a closed position by contacting the cover when the cover is located on the housing, and brings into an open position when the cover is removed and the contact thereof is interrupted, thus forming an open circuit between the phase output (4) and the supply connector (1); and a second switch (3) which is electrically connected with the second line (7) at a point of the second line (7) located between the neutral output (5) and the supply connector (1), and is located in the housing, wherein the second switch (3) is in a closed position by contacting the cover when the cover is located on the housing, and brings into an open position when the cover is removed and the contact thereof is interrupted, thus forming an open circuit between the neutral output (5) and the supply connector (1).

## Description

### Technical Field

The present invention relates to a safety system which is developed for electrical appliances, in particular for refrigerators and similar cooling devices, for cutting off power in case interference in a mainboard of the electric appliance is detected.

### Background of the Invention

Electrical appliances such as refrigerators, washing machines, dishwashers, ovens or the like comprise a body; electrical units which provide functions associated with the electrical appliances, such as washing, heating, cooling, etc.; and a mainboard which controls and coordinates functions of the electrical units. In case a problem occurs in the function of the appliance, the mainboard may be provided on the body with an externally accessible position such that service personnel are able to intervene easily. The mainboard is protected by a cover to prevent any user contact or an external interference by means of an object; and in case of a failure, access to the mainboard is provided by opening/demounting the cover indicated by the service personnel. However, the electrical appliance is required to be de-energised during said interventions since intervening in the mainboard when it is being energised may cause either system damages or occurrences of work accidents. For that reason, it is necessary to prevent the service personnel from interfering with said motherboard as a result of any negligence when it is being energized.

### Brief Description of the Invention

The safety system according to the present invention is suitable for use in an electrical appliance which comprises at least one body; at least one electrical unit for performing at least one function; at least one mainboard which controls and coordinates a function of the electrical unit; at least one supply connector through which the connection between the mainboard and a power source is provided, the power source having at least one phase output and at least one neutral output; at least a first line which provides the connection between the phase output and the supply connector; at least a second line which provides the connection between the neutral output and the supply connector; and at least one housing which is located at the body and suitable for placing the mainboard therein through an opening of the body provided on an outer surface that is accessible from outside, the safety system also comprising at least one cover which is placed on the opening to protect the mainboard from external factors, and prevents direct access to the mainboard; at least a first switch which is electrically connected with the first line at a point of the first line located between the phase output and the supply connector, and is located in the housing, wherein the first switch is in a closed position by contacting the cover when the cover is located on the housing, and brings into an open position when the cover is removed and the contact thereof is interrupted, thus forming an open circuit between the phase output and the supply connector; and at least a second switch which is electrically connected with the second line at a point of the second line located between the neutral output and the supply connector, and is located in the housing, wherein the second switch is in a closed position by contacting the cover when the cover is located on the housing, and brings into an open position when the cover is removed and the contact thereof is interrupted, thus forming an open circuit between the neutral output and the supply connector.

### Object of the Invention

An object of the present invention is to provide a safety system for electrical appliances, which enables interference in the mainboard of the electrical appliance to be detected.

Another object of the present invention is to provide a safety system for cutting off the power in case interference in the mainboard of the electrical appliance is detected.

A further object of the present invention is to provide a low-cost and reliable safety system.

### Description of the Drawings

Exemplary embodiments of the safety system according to the present invention are illustrated in the attached drawing, in which:

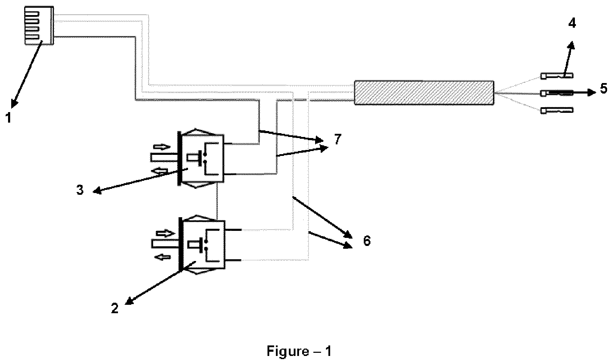

Figure 1 is a circuit diagram of an exemplary embodiment of the safety system according to the invention.

All the parts illustrated in figures are individually assigned a reference numeral and the corresponding terms of these numbers are listed below:

| | |
|---|---|
| Supply connector | (1) |
| First switch | (2) |
| Second switch | (3) |
| Phase output | (4) |
| Neutral output | (5) |
| First line | (6) |
| Second line | (7) |

### Description of the Invention

A mainboard comprised by the electrical appliances and controlling and coordinating functions of the electrical units associated with the appliance may be provided on the body in an externally accessible position such that service personnel are able to intervene easily in case a problem occurs in the function of the appliance. The mainboard is protected by a cover, and in case of a failure, access to the mainboard is enabled by opening/demounting the cover indicated by the service personnel. However, the electrical appliance is required to be de-energised during said interventions since intervening in the mainboard when it is being powered may cause either system damages or occurrences of work accidents. Therefore, with the present invention, there is provided a safety system for electrical appliances, which enables interference with the mainboard of the electrical appliance to be detected, and power to be cut off in such a case.

The safety system according to the present invention is suitable for use in an electrical appliance which comprises at least one body (not illustrated in the figures); at least one electrical unit (not illustrated in the figures) for performing at least one function; at least one mainboard (not illustrated in the figures) which controls and coordinates a function of the electrical unit; at least one supply connector (1) through which the connection between the mainboard and a power source, e.g. a mains supply, is provided, the power source having at least one phase output (4) and at least one neutral output (5); at least a first line (6) which provides the connection between the phase output (4) and the supply connector (1); at least a second line (7) which provides the connection between the neutral output (5) and the supply connector (1); and at least one housing (not illustrated in the figures) which is located at the body and suitable for placing the mainboard therein through an opening of the body provided on an outer surface that is accessible from outside, the safety system also comprising:
- at least one cover (not illustrated in the figures) which is placed on the opening to protect the mainboard from external factors and prevents direct access to the mainboard;
- at least a first switch (2) which is electrically connected with the first line (6) at a point of the first line (6) located between the phase output (4) and the supply connector (1), and is located in the housing, wherein the first switch (2) is in a closed position by contacting the cover when the cover is located on the housing, and brings into an open position when the cover is removed and the contact thereof is interrupted, thus forming an open circuit between the phase output (4) and the supply connector (1); and
- at least a second switch (3) which is electrically connected with the second line (7) at a point of the second line (7) located between the neutral output (5) and the supply connector (1), and is located in the housing, wherein the second switch (3) is in a closed position by contacting the cover when the cover is located on the housing, and brings into an open position when the cover is removed and the contact thereof is interrupted, thus forming an open circuit between the neutral output (5) and the supply connector (1).

In an exemplary embodiment of the invention, the first switch (2) and the second switch (3) which are placed in the housing during production stage of the electrical appliance contact the cover and bring into the closed position upon placing / mounting the cover on the housing. When in the closed position, the first switch (2) and the second switch (3) enables the current to pass through the first switch (2) and the second switch (3) to supply the mainboard, wherein the current reaches to the mainboard from the phase output (4) and neutral output (5). In case of any malfunction or maintenance, removing / demounting the cover interrupts the contact of the cover with the first switch (2) and the second switch (3) such that the first switch (2) and the second switch (3) brings into the opened position. When the first switch (2) and the second switch (3) bring into the opened position, connection of the mainboard with both the phase output (4) and the neutral output (5) is interrupted so that power supply of the mainboard is cut off; therefore, those removing the cover are prevented from contacting the energised mainboard in case that main electric supply of the electrical appliance is not cut off as a result of negligence during said maintenance and repair process. Because of the fact that users do not know locations of the phase output and the neutral output, and that there is a possibility by the user to plug a supply plug of the electrical device into a socket in any location, it would not be known from which supply line the phase line and the neutral line actually come from. In said system, since both the phase line and the neutral line are cut off, all the supply connection with the mainboard is disconnected when the cover is removed. Therefore, even if the electrical device is intervened while being energized, both system failures and possible accidents can be prevented because the energy reaching the mainboard is completely cut off.

In a preferred embodiment of the invention, the electrical appliance is a cooling device, preferably a refrigerator, and the cover is positioned on an opening which is located on a rear surface of the cooling device and provides access into the housing, the mainboard, and the switch unit components. In a preferred embodiment of the invention, there is provided at least one connecting unit, e.g. a screw, which provides the connection between the housing and the cover. In said embodiment, said connecting units are required to be demounted in order to remove the cover from the housing.

With the safety system of the present invention, the mainboard of the electrical appliance is prevented from being intervened without cutting the electrical supply/connection of the electrical appliance, thus avoiding any possible accidents or system damages.

## Claims

1. A safety system suitable for use in an electrical appliance which comprises at least one body (not illustrated in the figures); at least one electrical unit (not illustrated in the figures) for performing at least one function; at least one mainboard (not illustrated in the figures) which controls and coordinates a function of the electrical unit; at least one supply connector (1) through which the connection between the mainboard and a power source, is provided, the power source having at least one phase output (4) and at least one neutral output (5); at least a first line (6) which provides the connection between the phase output (4) and the supply connector (1); at least a second line (7) which provides the connection between the neutral output (5) and the supply connector (1); and at least one housing (not illustrated in the figures) which is located at the body and suitable for placing the mainboard therein through an opening of the body provided on an outer surface that is accessible from outside, the safety system **characterized by** comprising:
- at least one cover (not illustrated in the figures) which is placed on the opening to protect the mainboard from external factors and prevents direct access to the mainboard;
- at least a first switch (2) which is electrically connected with the first line (6) at a point of the first line (6) located between the phase output (4) and the supply connector (1), and is located in the housing, wherein the first switch (2) is in a closed position by contacting the cover when the cover is located on the housing, and brings into an open position when the cover is removed and the contact thereof is interrupted, thus forming an open circuit between the phase output (4) and the supply connector (1); and
- at least a second switch (3) which is electrically connected with the second line (7) at a point of the second line (7) located between the neutral output (5) and the supply connector (1), and is located in the housing, wherein the second switch (3) is in a closed position by contacting the cover when the cover is located on the housing, and brings into an open position when the cover is removed and the contact thereof is interrupted, thus forming an open circuit between the neutral output (5) and the supply connector (1).

2. A safety system according to Claim 1, **characterized in that** the electrical appliance is a cooling device.

3. A safety system according to any of the Claims 1 or 2, **characterized in that** the electrical appliance is a refrigerator.

4. A safety system according to any of the preceding claims, **characterized by** comprising at least one connecting unit which provides the connection between the housing and the cover.
